# EUROPEAN PATENT APPLICATION

(11) **EP 1 030 247 A2**
(43) Date of publication of application: **23.08.2000**
(21) Application number: 00650009.4
(22) Date of filing: 16.02.2000
(51) Int. Cl.: G06F 17/24

(54) **System and method for sharing bookmark information**

(30) Priority: 16.02.1999 US 250240
(71) Applicant: Nectaris Technologies Ltd., Bnei Brak 51200 (IL)
(72) Inventor: Mendelevitch, Ofer, Ramat Gan 51200 (IL); Segal, Avi, Modiin 71700 (IL)
(74) Representative: McKeown, Yvonne Mary

(57) **Abstract**

A method and a system for sharing bookmark information between a plurality of computer users, as well as for permitting a single computer user to retrieve the bookmark information from a plurality of computers. The bookmark information includes at least the URL of the Web page, but may optionally include other information as well, such as a brief description of the contents of the Web page, or of the area of interest according to which the Web page may be classified. The bookmark information may be selected, such that only a portion of the personal bookmark information of a computer user is shared. Furthermore, the other computer user or users with which the information is shared may be selected according to specific identification, according to which one or more individual users are identified as recipients, according to a category of such users, or a combination thereof. The category of users may be determined according to a shared area of interest, for example. Preferably, such bookmark information is shared between users according to a "delta", such that only that information which has been altered since the last exchange of information is exchanged, in order to avoid multiple exchanges of entire bookmark information repositories between users. Also preferably, the bookmark information is exchanged between users who are subscribers to a system providing these services, such that for example advertisements may be sent to these subscribers. Furthermore, preferably statistics are kept with regard to the Web pages bookmarked by the users, for example in order to rate a Web page. As another option, such information may be used in order to provide a search engine with more details than simply keywords for searching for relevant Web pages according to a request of a user. For example, the search engine optionally determines the relevance of a particular Web page to a particular area of interest according to the number of users who have bookmarked that Web page. Thus, the system and method of the present invention are able to augment search engines as well as to enable sharing of bookmark information between two or more users.

## Description

### FIELD AND BACKGROUND OF THE INVENTION

The present invention relates to a system and method for sharing bookmark information between a plurality of computer users, and in particular, to a system and method for determining how much of such bookmark information should be shared and with which other users, as well as a system and method for rating Web sites or pages based upon such bookmark information, and a system and method for globally sharing such bookmark information between multiple computers for each computer user. Optionally, an analysis of the bookmark information may be performed in order to assist a search engine to determine which Web page or pages are most useful for keyword searches in particular subject areas.

The explosion of information available through the Internet, particular through Web sites or pages, has increased the possibilities for finding other computer users with similar interests through "on-line" communication. Unfortunately, since such "on-line" communication most often occurs while the computer users are physically separated, sharing information such as interesting Web sites or pages is more difficult than if the parties were conversing face to face. For example, if a computer user wants to send the URL or address of an interesting Web page to another user, the first computer user may send the URL in an e-mail message to the second user. However, such a method for sharing interesting Web pages with other users is clearly tedious and time consuming. Furthermore, such an approach requires the computer user to know the e-mail (electronic mail) address of the other party before any information can be shared. Thus, this method is clearly not suitable for sharing information about Web pages with other users.

One attempt to provide a solution for this problem is disclosed in U.S. Patent No. 5,796,393, which describes a system for sharing information with a "community" of other computer users through the Internet. Such information may include bookmark information, for example. Bookmark information is the identity of URL's (addresses) of Web pages or sites which the user found to be of interest, and hence "bookmarked". Unfortunately, the system of U.S. Patent No. 5,796,393 only allows bookmark information to be shared with the entire community, such that computer users cannot distinguish selected portions of that community with whom they may wish to share more information than with the entire community, for example.

Furthermore, U.S. Patent No. 5,796,393 does not teach or suggest a system for managing the bookmarks of computer users, for rating such bookmarks or for performing searches according to such bookmarks. Instead, U.S. Patent No. 5,796,393 only teaches sharing these bookmarks with community members. Since an individual computer user may have bookmark information stored for many different Web sites or pages, managing this information can be quite difficult. For example, a computer user may wish to visit a Web page each time that it has been changed. A system which provides notification to a computer user when a Web page has been significantly changed is disclosed in U.S. Patent No. 5,813,007. However, this disclosed system does not teach or suggest sharing such bookmark information with other computer users. Furthermore, the disclosed system does not teach or suggest managing such bookmark information by subject area and so forth, or for rating such information according to other users in a community of users. Thus, neither U.S. Patent No. 5,796,393 nor U.S. Patent No. 5,813,007 teaches or suggests a system or a method for managing bookmark information which also allows selected sharing of such information with one or more other computer users according to at least one user-defined criterion. Furthermore, neither U.S. Patent No. 5,796,393 nor U.S. Patent No. 5,813,007 teaches or suggests a system or a method for rating Web pages according to such bookmark information or for increasing the efficacy of search engines according to such ratings.

There is thus a need for, and it would be useful to have, a system and a method for sharing bookmark information with one or more computer users according to at least one user-defined criterion, including information such as a rating of a Web page or site and an URL for a Web page or site, for managing such bookmark information for one computer user on a plurality of computers, for rating Web pages according to such bookmark information and for performing searches by a search engine at least partially according to these ratings.

### BRIEF DESCRIPTION OF THE DRAWINGS

The foregoing and other objects, aspects and advantages will be better understood from the following detailed description of a preferred embodiment of the invention with reference to the drawings, wherein:
FIG. 1A is a schematic block diagram of an overall system according to the present invention, while FIG. 1B is an illustrative client bar according to the present invention;
FIG. 2A is a schematic block diagram of the software components of the client of Figure 1 according to the present invention, while FIG. 2B is an exemplary pull-down menu advertisement according to the present invention;
FIG. 3 is a schematic block diagram of the software components of the server of Figure 1 according to the present invention; and
FIGS. 4A-4C show preferred embodiments of the present invention for graphical display on a Web page.

### SUMMARY OF THE INVENTION

The present invention is of a method and a system for sharing bookmark information between a plurality of computer users. The bookmark information includes at least the URL of the Web page, but may optionally include other information as well, such as a brief description of the contents of the Web page, or of the area of interest according to which the Web page may be classified. The bookmark information may be selected, such that only a portion of the personal bookmark information of a computer user is shared. Furthermore, the other computer user or users with which the information is shared may be selected according to specific identification, according to which one or more individual users are identified as recipients, according to a category of such users, or a combination thereof. The category of users may be determined according to a shared area of interest, for example.

Preferably, such bookmark information is shared between users according to a "delta", such that after such bookmark information has been exchanged once, only new or changed information is exchanged, in order to avoid repeated exchanges of entire bookmark information repositories between users.

Also preferably, the bookmark information is exchanged between users who are subscribers to a system providing these services, such that for example advertisements may be sent to these subscribers. Furthermore, preferably statistics are kept with regard to the Web pages bookmarked by the users, for example in order to rate a Web page. As another option, such information may be used in order to provide a search engine with more details than simply keywords for searching for relevant Web pages according to a request of a user. For example, the search engine optionally determines the relevance of a particular Web page to a particular area of interest according to the number of users who have bookmarked that Web page. Thus, the system and method of the present invention are able to augment search engines as well as to enable sharing of bookmark information between two or more users.

According to the present invention, there is provided a system for sharing at least a portion of bookmark information of a first user with a second user to form shared bookmark information, the shared bookmark information including at least one URL of a Web page, the first user having a first computer and the second user having a second computer, the system comprising: (a) a Web browser for each of the first and second computers for displaying the Web page; (b) a client for each of the first and second computers for detecting at least the URL of the Web page, the client being in communication with the Web browser for detecting the URL, and for receiving an instruction from the first user to share at least the URL with the second user; and (c) a system server for receiving the URL from the client of the first computer and the instruction, and for sending the URL to the client of the second computer according to the instruction, such that the Web browser of the second computer receives the URL to display the Web page.

According to another embodiment of the present invention, there is provided a method for sharing at least a portion of bookmark information of a first user with a second user to form shared bookmark information, the shared bookmark information including at least one URL of a Web page, the first user having a first computer and the second user having a second computer, the method comprising the steps of: (a) providing a database for storing the bookmark information of the first user; (b) receiving the bookmark information, including the URL of the Web page, by the database from the first user with an instruction for sharing at least a portion of the bookmark information with the second user to form the shared bookmark information; and (c) sending the shared bookmark information from the first user to the second user according to the instruction.

Hereinafter, the term "Web browser" refers to any software program which can display text, graphics, video, sound or other multimedia information, other information, or a combination thereof, from Web pages on World Wide Web sites. The Web browser is preferably able to operate a program written in the Java or JavaScript programming languages. Hereinafter, the term "Web page" refers to any document written in a mark-up language including, but not limited to, HTML (hypertext mark-up language) or VRML (virtual reality modeling language), dynamic HTML, XML (extended mark-up language) or related computer languages thereof, as well as to any collection of such documents reachable through one specific Internet address or at one specific World Wide Web site, or any document obtainable through a particular URL (Universal Resource Locator). Hereinafter, the term "Web site" refers to at least one Web page, and preferably a plurality of Web pages, virtually connected to form a coherent group. Hereinafter, the term "Web server" refers to a computer or other electronic device which is capable of serving at least one Web page to a Web browser.

Hereinafter, the term "applet" refers to a self-contained software module written in an applet language such as Java or constructed as an ActiveX™ control. Hereinafter, the term "computer" includes, but is not limited to, personal computers (PC) having an operating system such as DOS, Windows™, OS/2™ or Linux; Macintosh™ computers; computers having JAVA™-OS as the operating system; and graphical workstations such as the computers of Sun Microsystems™ and Silicon Graphics™, and other computers having some version of the UNIX operating system such as AIX™ or SOLARIS™ of Sun Microsystems™; a PalmPilot™, a PilotPC™, or any other handheld device; or any other known and available operating system. Hereinafter, the term "Windows™" includes but is not limited to Windows95™, Windows 3.x™ in which "x" is an integer such as "1", Windows NT™, Windows98™, Windows CE™ and any upgraded versions of these operating systems by Microsoft Inc. (Seattle, Washington, USA).

Hereinafter, the phrase "display a Web page" includes all actions necessary to render at least a portion of the information on the Web page available to the computer user. As such, the phrase includes, but is not limited to, the static visual display of static graphical information, the audible production of audio information, the animated visual display of animation and the visual display of video stream data.

Hereinafter, the terms "computer user" and "user" both refer to the person who operates the Web browser or other GUI interface and navigates through the system of the present invention by operating a computer.

The method of the present invention could also be described as a plurality of instructions being performed by a data processor, such that the method of the present invention could be implemented as hardware, software, firmware or a combination thereof. For the present invention, a software application could be written in substantially any suitable programming language, which could easily be selected by one of ordinary skill in the art. The programming language chosen should be compatible with the computing platform according to which the software application is executed. Examples of suitable programming languages include, but are not limited to, C, C++ and Java.

### DETAILED DESCRIPTION OF THE INVENTION

The present invention is of a method and a system for sharing bookmark information between a plurality of computer users, as well as for permitting a single computer user to retrieve the bookmark information from a plurality of computers. The bookmark information includes at least the URL of the Web page, but may optionally include other information as well, such as a brief description of the contents of the Web page, or of the area of interest according to which the Web page may be classified. The bookmark information may be selected, such that only a portion of the personal bookmark information of a computer user is shared. Furthermore, the other computer user or users with which the information is shared may be selected according to specific identification, according to which one or more individual users are identified as recipients, according to a category of such users, or a combination thereof. The category of users may be determined according to a shared area of interest, for example.

Preferably, such bookmark information is shared between users according to a "delta", such that only that information which has been altered since the last exchange of information is exchanged, in order to avoid multiple exchanges of entire bookmark information repositories between users.

Also preferably, the bookmark information is exchanged between users who are subscribers to a system providing these services, such that for example advertisements may be sent to these subscribers. Furthermore, preferably statistics are kept with regard to the Web pages bookmarked by the users, for example in order to rate a Web page. As another option, such information may be used in order to provide a search engine with more details than simply keywords for searching for relevant Web pages according to a request of a user. For example, the search engine optionally determines the relevance of a particular Web page to a particular area of interest according to the number of users who have bookmarked that Web page. Thus, the system and method of the present invention are able to augment search engines as well as to enable sharing of bookmark information between two or more users.

The principles and operation of a system and a method for sharing bookmark information between a plurality of computer users according to the present invention may be better understood with reference to the drawings and the accompanying description, it being understood that these drawings are given for illustrative purposes only and are not meant to be limiting.

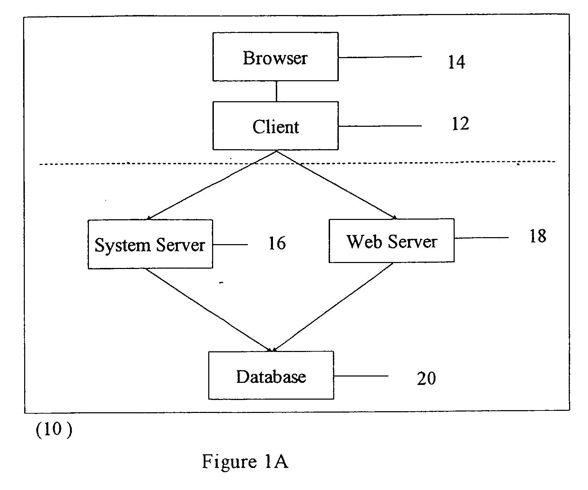

Referring now to the drawings, Figure 1A is a schematic block diagram of an overall system according to the present invention. A system **10** features a client **12** which is in communication with a Web browser **14**. Client **12** also interacts with a system server **16** and optionally also with a Web server **18** for serving one or more Web pages. System server **16** is in communication with a database **20** for storing bookmark information received from client **12**. Such bookmark information includes at least one URL of a Web page, thereby enabling a browser such as Web browser **14** to "download" or retrieve the Web page from a server such as Web server **18**. The Web page may then be displayed through the GUI of Web browser **14**. Thus, for system **10**, for each "bookmarked" Web page, or Web page for which bookmark information is available, at least the URL of the Web page is stored.

This method for storing the URL of the Web page as bookmark information for a single computer user is known in the art. However, according to the present invention, such bookmark information may additionally include other information about the Web page, such as a textual description of the contents of the Web page, a rating for the Web page from the computer user or optionally from at least one other user, an indication of an area of interest according to which the Web page may be categorized, and sharing information as described in greater detail below. More preferably, the rating is determined from the bookmark information, again as described in greater detail below. This optional information has not been taught or suggested by the background art, particularly with regard to a system for sharing bookmark information between specific, identified users.

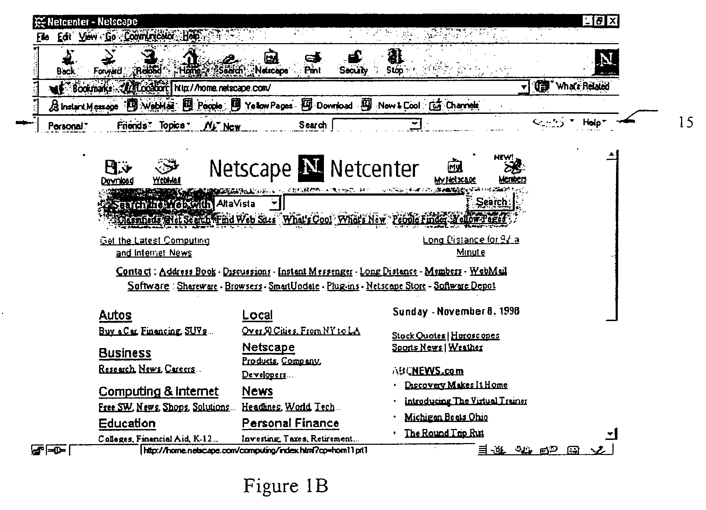

Client **12** is optionally integrated with Web browser **14**, such that the GUI through which client **12** communicates with the user is displayed with the GUI of Web browser **14** in an integrated manner. Preferably, client **12** attaches an additional "bar window" to the existing tool-bars of Web browser **14**, to form a "client bar" **15**, as shown in Figure 1B. Client bar **15** enables the user to interact with client **12** for viewing one or more bookmarks for each Web page, managing bookmark information, optionally for viewing shared bookmark information from one or more other users and so forth. Such shared bookmark information may organized in a number of ways. For example, the shared bookmark information is optionally organized according to the other user from which it was received and/or according to topic. Information which is organized according to the user from which it was received may be organized according to the identity of specific, individual users, or alternatively according to a category of user, such as an open or moderated public list. More preferably, client bar **15** of client **12** includes one or more "pull down menus" for providing these functions and other functions, such as changing sharing preferences and so forth.

Alternatively, the GUI of client **12** may appear to be distinct from the GUI of Web browser **14**. In either case, client **12** and Web browser **14** are optionally embodied as one integrated software package or alternatively as separate software packages. Hereinafter, the term "GUI" is used generally to refer to any type of user interface, preferably a graphical user interface.

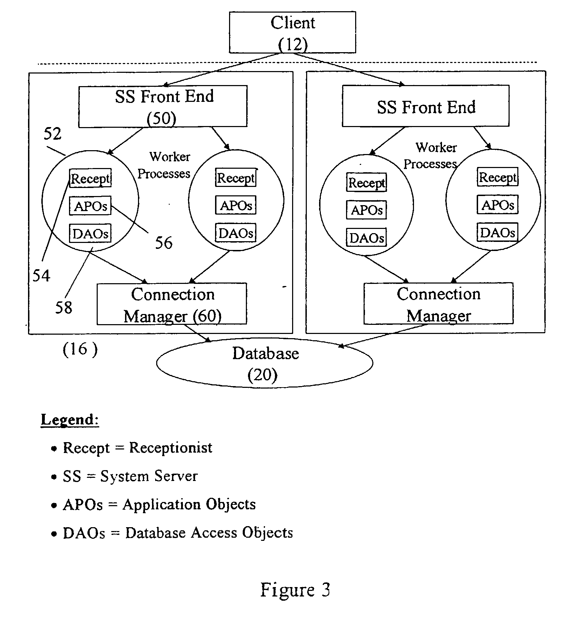

In addition to providing a GUI for communication with the user, client **12** also interacts with a system server **16** and optionally also with a Web server **18** for serving one or more Web pages. Although only one client **12** is shown, it is understood that a plurality of such clients **12** must be at least serially (but not necessarily simultaneously) connected to system server **16** in order for the present invention to be operable. According to a preferred embodiment of the present invention, described in greater detail with regard to Figure 3 below, the computer users interacting with clients **12** are described as "subscribes" who subscribe to the services provided by system server **16** and system **10** of the present invention.

System server **16** provides management of the bookmark information of a computer user, which is then optionally and preferably also stored in a database **20**. Although system **10** is operable with such information being stored entirely local to client **12**, for example on a computer which is operating client **12**, or else entirely removed from client **12**, the preferred embodiment in which the bookmark information is stored local to client **12** and is then duplicated in database **20** is described below as an illustrative example only and without any intention of being limiting.

Client **12** preferably maintains such bookmark information for the computer user in a local list. This list preferably includes the personal bookmark information of the user, bookmark information shared with one or more specific computer users, and any public bookmark information. Client **12** then synchronizes the local bookmark information with bookmark information stored by Web browser **14**. Thus, any new Web pages which are "bookmarked" by the user through Web browser **14** are preferably also stored in the local bookmark information stored by client **12**.

Client **12** then collects any changes in the local bookmark information, which occur as the user adds, removes or changes bookmark information for a particular Web page or group of such pages, and then preferably sends these changes to system server **16** for storage in database **20**. Each such change is more preferably represented as a "delta", in that the change is described as an alteration to the current personal bookmark information. This delta is used for sharing bookmark information with at least one other user, such that only the delta is exchanged between users by being exchanged through clients **12** after an initial exchange of the complete bookmark information to be shared, rather than repeatedly exchanging the entirety of the bookmark information between clients **12** each time a change is made.

The bookmark information is also managed for the user by system **10**. This management is provided through system server **16** and database **20**, such that the information required for such management is stored on database **20** and accessed by system server **16** as required. System server **16** then presents bookmark information and/or options for interacting with bookmark information to the user through client **12**.

One example of a method for storing such information would be as a series of fields, optionally accessed according to the URL of the Web page for which the bookmark information is stored. For the purposes of discussion only, the following description features this method for storing information, it being understood that this is without any intention of being limiting.

The management of the bookmark information is preferably provided on multiple levels. For example, preferably, the personal bookmark information of each user is stored on database **20**, such that this information is available to the computer user at substantially any computer for "global availability". Such a preferred feature enables the user to access the same bookmark information at more than one computer without being forced to store such information on each computer separately.

More preferably, the personal bookmark information is optionally downloaded to at least one computer being used by the user, such that at least a portion of the bookmark information is also available at the local computer of the user. This preferred feature enables the user to keep a copy of the information locally, which is then updated each time client **12** interacts with system server **16** and hence with database **20**. Such a local copy may be particularly useful if the available bandwidth between client **12** and system server **16** is particularly low, for example at periods of peak usage of the Internet, in order to avoid transmission delays for the bookmark information. Preferably, the bookmark information is substantially automatically mirrored locally for all of the different computers through which the user operates client **12**.

Other optional personal bookmark information includes, but is not limited to, the period of time which has elapsed since the Web page was last visited, the time at which the bookmark was created, and the number of visits to the Web page. Preferably, system server **16** is able to indicate whether the Web page is still available, such that Web pages which are no longer functioning are at least marked on the personal bookmark information stored in database **20**, and are more preferably removed from this personal bookmark information.

In addition to management of the personal bookmark information of the user for access through a plurality of computers, system **10** preferably also manages sharing of at least a portion of such personal bookmark information with at least one other user. Such sharing is preferably enabled at multiple levels, more preferably by specific identity of one or more users or by area of interest. Information regarding such sharing is preferably stored in database **20**, for example as a list of one or more computer users with which the user wishes to share information, rating information about one or more Web pages and other types of related information, described in greater detail below.

On the most restricted level, preferably the computer user may optionally select only specific computer user(s) with which the information may be shared. For example, the computer user may wish to share a particular bookmark or set of bookmarks with one or more specific users, who are designated by name, e-mail address or other specific identification. The term "specific identification" refers to identification which identifies an individual user rather than a category of such users. Such specific identification is preferably stored in database **20** for access by system server **16**.

Preferably, the bookmark information to be shared is identified by a selection factor selected from the group consisting of the URL of the Web page and the area of interest (category) of the Web page. Such a selection factor is entered by the user through client **12** and is also preferably stored in database **20**. Thus, the user may optionally choose to share all Web pages in a particular area of interest with at least one other computer user. Alternatively, the user may choose to share only certain Web page(s) individually selected by designating the URL of that page.

A somewhat less restricted level of sharing is optionally performed according to a category of users. For example, the user may belong to a group of other computer users in which membership is defined according to at least one membership criterion, such as a mutual interest in a subject area. This group is referred to herein as a "public list", which is a community of a plurality of individuals who share bookmark information relevant to the membership criterion.

For open public lists, membership in the group may not be restricted, such that shared information from a particular user is generally available. However, such groups are still generally formed around a particular area of interest, such that bookmark information submitted to the group should be related to that particular area of interest.

The group could be a moderated public list, in which access is restricted only to members for sharing bookmark information, typically according to an area of interest. Such a list is controlled by a moderator who decides if a user may join the group in order to submit bookmark information to the members of the group and/or to retrieve such bookmark information provided by other members. The moderator may optionally have the power to determine whether particular bookmark information submitted by a member is to be submitted to the group, as well as to revoke the membership of a user. In such a case, information regarding membership in the list is optionally also stored in database **20**, or alternatively may be stored at a different location, according to the organization of the moderated list.

Bookmark information may also be published in a format which is publicly available for retrieval by other computer users, but which is not necessarily available only to members of a group. For example, the computer user could choose to publish substantially all personal bookmark information, or a portion thereof, through a publication outlet such as a personal Web page. Such a publication outlet may be differentiated from a group, in that the publication outlet is not intended for interaction with other users, but only to display information.

One example of such publication of personal bookmark information could be publication of bookmark information by a well known authority in a particular field. Such information could potentially be of interest to other computer users who are interested in that particular field.

Optionally and preferably, the bookmark information is organized according to a hierarchical tree. This tree features branches determined according to area of interest; topic of a public list; and/or the identity of a specific other user from whom the bookmark information was obtained. Thus, the user is able to look for bookmark information according to a variety of criteria, including the topic of the bookmark information and the source of that information if shared.

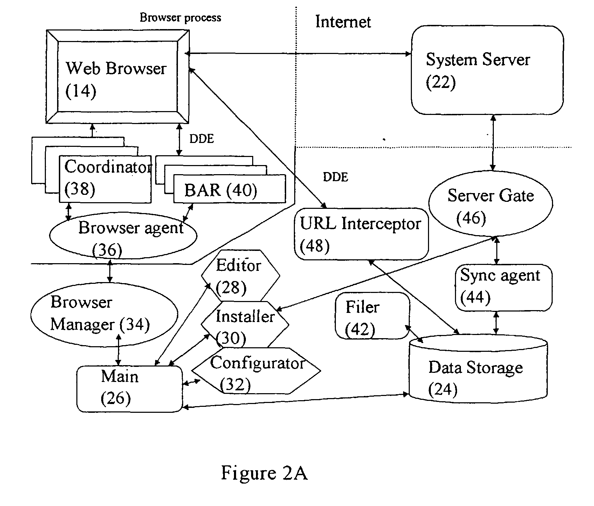

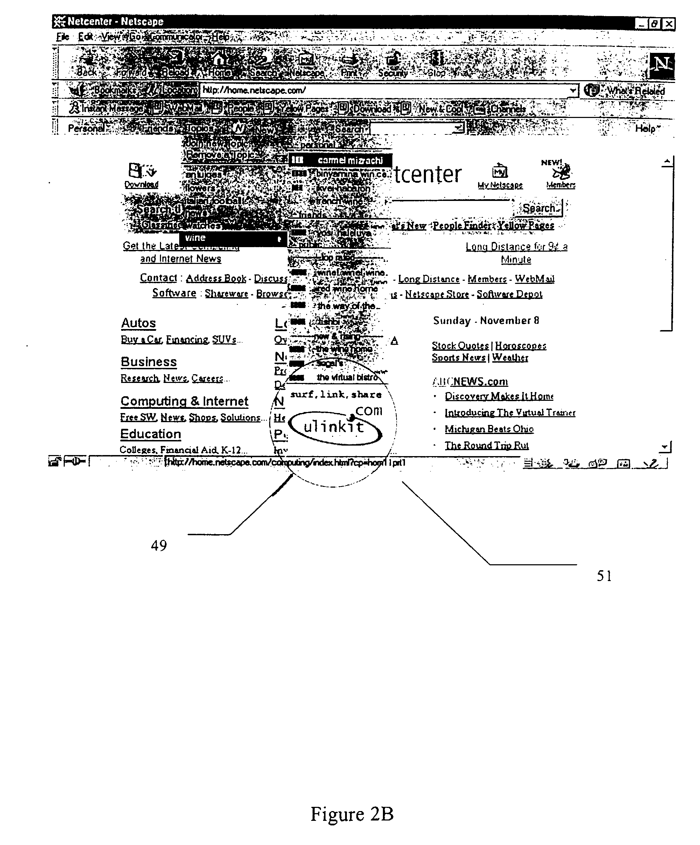

Figure 2 is a schematic block diagram of an illustrative software system architecture for system **10** of Figure 1. Client **12** preferably features a plurality of software components which interact with Web browser **14**, as well as with a server software component **22** for the system server of Figure 1 and a data storage software component **24** for information which is stored in a database local to client **12**. These components include a main component **26**. Main component **26** preferably controls the activities of three sub-components, including an editor component **28**, an installer component **30** and a configuration component **32**.

Editor component **28** enables the user to edit and organize bookmark information, for example to place bookmark information related to a particular Web page in a particular category or area of interest, or to alter the extent to which this bookmark information is shared for example. Configuration component **32** enables configuration options for client **12** to be changed after client **12** is installed, while installer component **30** handles the actual installation of client **12**.

After client **12** has been installed and is operating, a browser manager **34** watches for a new browser window or process from Web browser **14**. For each new browser process, browser manager **34** injects a browser agent **36**. Browser agent **36** then examines the new browser process to look for a new browser window produced by the new browser process. Browser manager **34** then creates a coordinator software component **38** and a BAR software component **40** for each new browser window in order to embed a GUI of client **12** in this new browser window. A plurality of such coordinator software component **38** and a BAR software component **40** pairs is shown, indicating that each such pair may be launched for a new browser window being operated by an . operating system which supports multiple threads or processes.

In addition, BAR software component **40** sends changes in bookmark information to data storage software component **24** for the local database, for example when a new Web page is bookmarked by the user. Local synchronization between the information stored locally to client **12**, and managed by data storage software component **24**, and information which is stored in the regular bookmark repository of Web browser **14**, is maintained by a filer component **42**. Filer component **42** preferably maintains bi-directional synchronization, such that every change in the information managed by data storage software component **24** is mirrored in the regular bookmark repository of Web browser **14**, and conversely such that every change in the regular bookmark repository of Web browser **14** is detected and then reproduced in the information managed by data storage software component **24**.

In addition, a sync agent **44** preferably maintains such bi-directional synchronization between the information managed by data storage software component **24**, and the information stored on the system database of Figure 1 and managed through server software component **22**. Sync agent **44** communicates with server software component **22** through a server gate component **46**. Server gate component **46** handles communication protocols with server software component **22**.

According to another preferred embodiment of the present invention, statistical information is gathered about the number of users who bookmark a particular Web page. Optionally and preferably, statistics may.also be gathered with regard to a number of times a Web page is visited by the computer user in a given time period, the frequency of visits to Web page(s) in an area of interest and so forth. Such information is preferably gathered by client **12** for the individual user and then sent to system server **16** for manipulation, organization and storage in database **20**. Such statistical information, in particular the number of users who bookmark a particular Web page, is then used to derive ratings for the Web pages.

These ratings may optionally be used to rank Web pages by popularity, for example. In addition, preferably these ratings include Web pages whose popularity is increasing at a rapid rate.

With regard to the exemplary system shown in Figure 2, preferably an URL interceptor component **48** uses DDE (dynamic data exchange) to receive URL echo messages from Web browser **14**, or any other mechanism provided by the browser to intercept URL's. DDE is an internal mechanism of the Windows™ operating system for exchanging information between processes. Each such message is sent when an URL is visited by the user through Web browser **14**, through a bookmark, according to a link or else by typing the URL directly into Web browser **14**. URL interceptor component **48** reports the number of times each URL is visited to data storage component **24** for collecting the statistics for this preferred embodiment of the present invention. In addition, URL interceptor component **48** reports when an URL is bookmarked by the user for the first time, again for the collection of statistics.

The statistics are collected and analyzed by server software component **22**. These statistics preferably include, but are not limited to, the number of times computer users, or "subscribers" to the system of the present invention, visit a particular URL, as a total group, or segmented according to type of interaction with the URL, area of interest for the URL, or even characteristics of subgroups within the group of subscribers. For example, subscribers may be divided into subgroups according to geographic area, income levels and any other such characteristics about which information has been gathered for the subscribers. Optionally and preferably, such statistics are also gathered for individual users, in order to determine the interests of each individual user. Such statistics may then be correlated with each URL for various purposes, such as rating the popularity of the URL, determining the value of advertisements displayed through the Web page associated with that URL and so forth.

Preferably, the subscribers are able to subscribe to the services offered according to system **10** of the present invention as follows. First, each subscriber downloads and installs software according to the present invention for client **12**. Next, the subscriber preferably selects a user name and password. The subscriber then uploads the bookmark information already gathered to system server **16** for storage in database **20**. Optionally, the subscriber may be requested to supply other personal information for storage in database **20**.

According to another preferred embodiment of the present invention, the system of the present invention is able to generate monetary revenues through the sales of advertisements. Such advertisements are optionally targeted to individual users by being displayed through the GUI of client **12** through BAR software component **40**. Preferably, such a display is given on a pull-down menu associated with the GUI of client **12**. For example, the Windows™ operating systems permit display of images, text or a combination on a pull-down menu, such that the display of the advertisement on the pull-down menu is possible through known features of these operating systems. Such an advertisement **49**, displayed through a pull-down menu **51**, is shown in Figure 2B. Alternatively and preferably, the advertisement could be displayed substantially anywhere on the GUI of client **12**, for example in a separate window.

Targeting of advertisements is performed at least according to the bookmark information of the individual subscribers. Preferably, targeting is also performed according to the topic of public lists and according to Web pages visited by the user. Optionally, the targeting is also performed according to the characteristics of the computer users as subscribers to the system of the present invention.

Although targeting of advertisements to individual users has been previously described for the display of advertisements in software programs, for example according to the system of Cydoor Ltd. (Givatayim, Israel), such targeting according to bookmark information has not been previously described in the art.

Web server **18** preferably includes a search engine and other utilities which are based upon the information stored in database **20**. Such a search engine preferably features keywords from the Web page associated with a particular URL, weighted according to the frequency of bookmarking the page by subscribers to system **10**. Each Web page can also be associated with one or more areas of interest of public list(s). Furthermore, the value of each Web page to each area of interest can be determined through the aggregate number of visits to the URL associated with that Web page. Thus, the search results from the search engine contain the URL of one or more Web pages which have been determined to be of particular interest to other computer users, rather than only delivering search results according to keyword matches.

Figure 3 shows an illustrative, preferred embodiment of system server **16** in more detail according to the present invention. As shown, client **12** is connected to at least one system server **16**, and preferably to a plurality of system servers **16** in order to increase the robustness of the system, for example to allow client **12** to access a second system server **16** if a first system server **16** is busy. Each system server **16** is in turn connected to database **20**, thereby managing interactions between client **12** and database **20**.

Each system server **16** preferably features a system server front end **50**, which receives TCP load probing inquiries from client **12** and sends load responses to client **12**. System server front end **50** also receives TCP login connection requests from client **12**. System server front end **50** then preferably routes these login requests to a worker process **52** as appropriate for handling the session with client **12**.

Each worker process **52** features at least one thread for handling sessions with client **12**, such that each thread preferably handles one session with client **12**. Preferably, each system server **16** contains multiple worker processes **52** in order to increase reliability and robustness. In such a preferred embodiment, each worker process **52** optionally and preferably receives a priority rating according to which worker process **52** is handled by system server **16**. Each worker process **52** preferably features a receptionist **54** for receiving incoming requests. These incoming requests are then processed by one or more application objects (APO) **56** to handle the requests. One or more data access objects (DAO) **58** then interact with database **20**.

Each DAO **58** is a low-level object which hides access details for database **20** from APO **56**, which is at a higher level. DAO **58** supplies the query, insert and update functions for APO **56**. DAO **58** communicates with database **20** through a connection manager **60**, which is responsible for managing connections to database **20**.

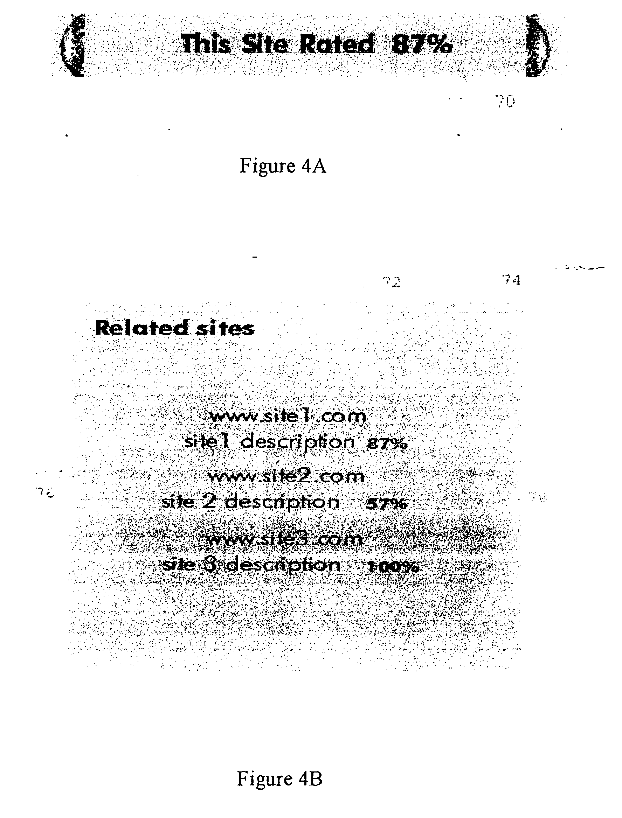

The previous description included technical details for operation, which can enable various embedded graphical displays for Web site owners. Figures 4A-4C show preferred embodiments of the present invention for embedded graphical display on a Web page. Figure 4A shows a personal embedded panel according to the present invention, which is a graphical panel for display on a Web page. This panel has several functional buttons for interacting with the system of the present invention. A first button **62**, labeled "share with me", causes a form to be provided through which any user may request to share bookmark information with the owner of the Web page. A second button **64**, labeled "show my bookmarks", enables the user to see the public bookmark information of the owner of the Web page. For example, this information could be provided through a special Web page provided through the Web server of Figure 1. Buttons **66**, of which three examples are shown for the purposes of illustration only, are topic buttons. Selection of topic button **66** enables the user to see the public bookmark information according to that topic. Button **68** causes a form to be displayed for subscribing to the system of the present invention.

Figure 4B shows a site rating extraction panel **70**. Site rating extraction panel **70** is used to display the rating of a particular Web page according to the statistical information which was previously described. This rating can be global, according to all Web pages for which bookmark information has been stored with the system of the present invention, or else according to the topic of interest of the Web page.

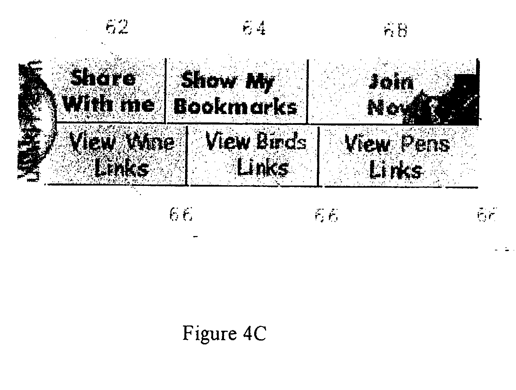

Figure 4C is a topic list display panel **72** for displaying related Web pages, related to the Web page on which topic list display panel **72** is displayed, according to their relative popularity. Each related Web page is displayed with a link to an URL **74**, followed by a brief description **76** and the rating **78** for that Web page.

It will be appreciated that the above descriptions are intended only to serve as examples, and that many other embodiments are possible within the spirit and the scope of the present invention.

## Claims

1. A system for sharing at least a portion of bookmark information of a first user with a second user to form shared bookmark information, the shared bookmark information including at least one URL of a Web page, the first user having a first computer and the second user having a second computer, the system comprising:
(a) a Web browser for each of the first and second computers for displaying the Web page;
(b) a client for each of the first and second computers for receiving an instruction from the first user to share at least the shared bookmark information with the second user, said instruction including an identification of the second user; and
(c) a system server for receiving the shared bookmark information from said client of the first computer and said instruction, and for sending the shared bookmark information to said client of the second computer according to said instruction, such that said Web browser of the second computer receives the shared bookmark information to display the Web page.

2. The system of claim 1, wherein said client and said Web browser are integrated, such that the first user and the second user interact with said client and said Web browser through a single GUI (graphical user interface).

3. The system of claim 1, wherein said instruction includes a specific identification of the second user for specifically identifying the second user.

4. The system of claim 3, wherein said specific identification is selected from the group consisting of a name of the second user and an e-mail address of the second user.

5. The system of claim 1, wherein the bookmark information further includes an area of interest for categorizing the Web page.

6. The system of claim 5, wherein said instruction includes an identification of said second user according to a category.

7. The system of claim 6, wherein said category is determined at least according to said area of interest, such that the first user and the second user share said area of interest.

8. The system of claim 7, further comprising a public list including the first user and the second user as members for sharing bookmark information, wherein said category is determined at least according to said public list.

9. The system of claim 1, wherein the first computer is a plurality of computers, such that the first user operates said client and said Web browser on said plurality of computers, the system further comprising:
(d) a database for storing at least the shared bookmark information and said instruction from one of said plurality of computers of the first user, such that the bookmark information for the first user is retrieved by said client being operated on any of said plurality of computers of the first user.

10. The system of claim 9, wherein the bookmark information of the first user is additionally stored local to said client, the system further comprising:
(e) a sync software component for synchronizing between the bookmark information stored local to said client and the bookmark information stored in said database.

11. The system of claim 10, wherein said sync software component mirrors the bookmark information stored local to each client on said plurality of computers according to the bookmark information stored in said database.

12. A method for sharing at least a portion of bookmark information of a first user with a second user to form shared bookmark information, the shared bookmark information including at least one URL of a Web page, the first user having a first computer and the second user having a second computer, the method comprising the steps of:
(a) providing a database for storing the bookmark information of the first user;
(b) receiving the bookmark information, including the URL of the Web page, by said database from the first user with an instruction for sharing at least a portion of the bookmark information with the second user to form the shared bookmark information; and
(c) sending the shared bookmark information from the first user to the second user according to said instruction.

13. The method of claim 12, wherein the bookmark information of the first user further includes an area of interest for categorizing the Web page.

14. The method of claim 13, wherein step (a) further comprises the step of:
(i) providing a Web browser for being operated by the first computer of the first user;
and wherein the method further comprises the steps of:
(e) detecting the URL of the Web page when said Web browser of the first user loads the Web page;
(f) counting a number of times said Web browser of the first user loads the Web page; and
(g) determining a rating for the Web page for said area of interest according to said number of times said Web browser of the first user loads the Web page.

15. The method of claim 13, wherein step (a) further comprises the step of:
(i) providing a Web browser for being operated by the first computer of the first user;
and wherein the method further comprises the steps of:
(e) displaying an advertisement by said Web browser of the first user according to said area of interest.

16. The method of claim 15, wherein said Web browser features a pull-down menu, and said advertisement is displayed on said pull-down menu.

17. The method of claim 13, wherein said instruction includes an identification of the second user according to a category.

18. The method of claim 17, wherein said category is determined at least according to said area of interest, such that the first user and the second user share said area of interest.

19. The method of claim 18, wherein said category is determined according to a public list, such that the first user and the second user are both members of said public list.

20. The method of claim 19, wherein said public list is a moderated public list, such that access to said public list is restricted by a moderator.

21. The method of claim 12, wherein said instruction includes a specific identification of the second user for specifically identifying the second user.

22. The method of claim 21, wherein said specific identification is selected from the group consisting of a name of the second user and an e-mail address of the second user.

23. The method of claim 12, further comprising the steps of:
(d) updating the shared bookmark information according to an action of the first user to form updated bookmark information, such that at least a portion of said updated bookmark information is different from the shared bookmark information; and
(e) sending only said at least a portion of said updated bookmark information to the second user.

24. The method of claim 12, wherein a rating for the Web page is determined according to a number of users storing at least the URL of the Web page as bookmark information.

25. The method of claim 24, wherein said rating is determined according to a total of said number of users.

26. The method of claim 24, wherein said rating is determined according to a rate of increase of said number of users.

27. The method of claim 24, further comprising the steps of:
(d) searching for a Web page according to at least one keyword; and
(e) retrieving said Web page according to said rating.

28. The method of claim 24, wherein the Web page displays said rating.

29. The method of claim 28, wherein the Web page displays at least one rating for at least one related Web page, said at least one related Web page being related to the Web page according to topic.

30. The method of claim 12, wherein a rating for the Web page is determined by a single user for a plurality of users.

31. The method of claim 12, wherein the Web page further features a functional panel for sharing bookmark information.

32. A method for displaying an advertisement through a GUI (graphical user interface), the steps of the method being performed by a data processor, the method comprising the steps of:
(a) providing a pull-down menu for the GUI; and
(b) displaying the advertisement on the pull-down menu.
